(19) Europäisches Patentamt / European Patent Office / Office européen des brevets

(11) **EP 4 440 211 A1**

(12) **EUROPEAN PATENT APPLICATION**
published in accordance with Art. 153(4) EPC

(43) Date of publication:
**02.10.2024 Bulletin 2024/40**

(21) Application number: **22919014.5**

(22) Date of filing: **25.11.2022**

(51) International Patent Classification (IPC):
*H04W 56/00* (2009.01)    *H04W 24/10* (2009.01)
*H04W 16/28* (2009.01)    *H04B 7/06* (2006.01)

(52) Cooperative Patent Classification (CPC):
**H04B 7/06; H04W 16/28; H04W 24/10;
H04W 56/00**

(86) International application number:
**PCT/KR2022/018829**

(87) International publication number:
**WO 2023/132477 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.01.2022 KR 20220002689
15.04.2022 KR 20220046847**

(71) Applicant: **Samsung Electronics Co., Ltd.
Suwon-si, Gyeonggi-do 16677 (KR)**

(72) Inventors:
• **JUNG, Doyoung**
  Suwon-si, Gyeonggi-do 16677 (KR)
• **RYOU, Sangkyou**
  Suwon-si, Gyeonggi-do 16677 (KR)
• **BAEK, Ingil**
  Suwon-si, Gyeonggi-do 16677 (KR)
• **YOON, Seokjun**
  Suwon-si, Gyeonggi-do 16677 (KR)
• **JEONG, Sanguk**
  Suwon-si, Gyeonggi-do 16677 (KR)

(74) Representative: **Gulde & Partner
Patent- und Rechtsanwaltskanzlei mbB
Wallstraße 58/59
10179 Berlin (DE)**

(54) **BEAM-BASED UPLINK SYNCHRONIZATION CONTROL METHOD AND DEVICE**

(57)    The present disclosure relates to a method by which a terminal aligns uplink synchronization in a wireless communication system. The method comprises the step of acquiring a difference value between synchronization signal (SS)/physical broadcast channel (PBCH) block-based first downlink synchronization corresponding to a first beam and SS/PBCH block-based second downlink synchronization corresponding to a second beam. The method comprises the step of transmitting, to a base station, report information including information associated with the difference value, on the basis of the comparison of the second downlink synchronization and cyclic prefix (CP) length. The method comprises the step of receiving, from the base station, information about a timing advance (TA) value derived on the basis of the information associated with the difference value.

FIG. 9

## Description

**[Technical Field]**

The present disclosure relates to a method and device for synchronizing and continuously tracking synchronization between a base station and a terminal in a wireless communication system.

**[Background Art]**

In order to meet the increasing demand for wireless data traffic after the commercialization of the 4G communication system, efforts are being made to develop an improved 5G communication system or pre-5G communication system. For this reason, the 5G communication system or pre-5G communication system is called a Beyond 4G Network communication system or a Post LTE system. The 5G communication system set by 3GPP is called the New Radio (NR) system. To achieve high data rates, the 5G communication system is being considered for implementation in ultra-high frequency (mmWave) band (e.g., 60 GHz band). In order to alleviate path loss of radio wave in the ultra-high frequency band and increase transmission distance of radio wave, beamforming, massive MIMO, full dimensional MIMO (FD-MIMO), array antenna, analog beam-forming, and large scale antenna technologies were discussed in the 5G communication system and applied to the NR system. In addition, to improve the network of the system, technologies such as evolved small cell, advanced small cell, cloud radio access network (cloud RAN), ultra-dense network, Device to Device communication (D2D), wireless backhaul, moving network, cooperative communication, Coordinated Multi-Points (CoMP), and interference cancellation are being developed in the 5G communication system. In addition, advanced coding modulation (ACM) method such as Hybrid FSK and QAM Modulation (FQAM) and Sliding Window Superposition Coding (SWSC), and advanced access technology such as Filter Bank Multi Carrier (FBMC), non-orthogonal multiple access (NOMA), and sparse code multiple access (SCMA) are being developed in the 5G system.

Meanwhile, the Internet is evolving from a human-centered network in which humans create and consume information to an Internet of Things (IoT) network that exchanges and processes information between distributed components such as an object. Internet of Everything (IoE) technology, which combines IoT technology with big data processing technology through connection with a cloud server, and so on, is also emerging. In order to implement IoT, technology elements such as sensing technology, wired and wireless communication and network infrastructure, service interface technology, and security technology are required, and recently, technology such as sensor network, Machine to Machine (M2M), and Machine Type Communication (MTC) for connection between objects are being researched. In the IoT environment, an intelligent Internet Technology (IT) service that creates new value in human life by collecting and analyzing data generated from connected objects may be provided. IoT may be applied to fields such as a smart home, a smart building, a smart city, a smart car or a connected car, a smart grid, health care, smart home appliances, and advanced medical service through convergence and combination of existing information technology (IT) and various industries.

Accordingly, various attempts are being made to apply the 5G communication system to the IoT network. For example, technology such as sensor network, Machine to Machine (M2M), and Machine Type Communication (MTC) are being implemented by the 5G communication technology such as beamforming, MIMO, and array antenna. The application of cloud RAN as a big data processing technology described above may also be said to be an example of the convergence of the 5G technology and the IoT technology.

**[Disclosure]**

**[Technical Problem]**

The present disclosure proposes a method and device for controlling and tracking uplink synchronization in a beamforming-based wireless communication system.

In addition, the present disclosure proposes a method of obtaining DL sync for each transmission (Tx) beam of a base station and reporting DL Sync difference information for each beam to the base station through beam-related reporting.

Technical tasks to be achieved in the present disclosure are not limited to the technical tasks mentioned above, and other technical tasks not mentioned will be clearly understood by those having ordinary knowledge in the art to which the present disclosure belongs from the description below.

**[Technical Solution]**

According to an embodiment, a method for aligning uplink synchronization by a terminal in wireless communication system may comprise obtaining a difference value between first downlink synchronization based on a synchronization signal/physical broadcast channel, SS/PBCH, block corresponding a first beam and second downlink synchronization based on a SS/PBCH block corresponding a second beam. The method may comprise transmitting, based on comparison between the second downlink synchronization and cyclic prefix, CP, length, reporting information comprising information associated with the difference value to a base station. The method may comprise receiving, from the base station, information on a timing advance, TA, value derived based on the information associated with the difference value.

According to an embodiment, in case of that the second downlink synchronization is greater than the CP length, information associated with the difference value may be comprised in the reporting information.

According to an embodiment, the method may comprise measuring a reference signal received power, RSRP, value based on each of SS/PBCH block corresponding a different beam of the base station. The method may comprise selecting, based on the RSRP value, one or more candidate beams among a plurality of beams of the base station. The method may comprise selecting a beam corresponding to the smallest value among difference values between downlink synchronization associated with each of the one or more candidate beams and the first downlink synchronization, as the second beam. The reporting information may comprise a SS/PBCH block index corresponding to the second beam, the RSRP value, and the difference value.

According to an embodiment, indexes corresponding to range of difference value is pre-defined based on the first downlink synchronization, and index corresponding to the obtained difference value may be comprised in the reporting information.

According to an embodiment, the reporting information may comprise 1-bit information indicating that the SS/PBCH block index corresponding to the second beam, a reference signal received power, RSRP, value, and the TA value need to be updated.

According to an embodiment, the information on the TA value may be comprised on medium access control element, MAC CE, command comprising information indicating a change from the first beam to the second beam.

According to an embodiment, the method may comprise receiving configuration information comprising a request to report the information associated with the difference value.

According to an embodiment, a method performed by a base station in a wireless communication system may comprise transmitting, based on a plurality of beams of the base station, a plurality of synchronization signal/physical broadcast channel, SS/PBCH, blocks to a terminal. The method may comprise receiving reporting information comprising information associated with a difference value between first downlink synchronization based on a SS/PBCH block corresponding a first beam and second downlink synchronization based on a SS/PBCH block corresponding a second beam, from the terminal. The method may comprise transmitting information on a timing advance, TA, value derived based on the information associated with the difference value to the terminal. The information associated with the difference value may be comprised in the reporting information based on comparison between the second downlink synchronization and cyclic prefix, CP, length.

According to an embodiment, a terminal of a wireless communication system may comprise a transmit/receive unit configured to transmit and receive signals, and a control unit controlling the transmit/receive unit. The control unit may be configured to obtain a difference value between first downlink synchronization based on a synchronization signal/physical broadcast channel, SS/PBCH, block corresponding a first beam and second downlink synchronization based on a SS/PBCH block corresponding a second beam. The control unit may be configured to transmit, based on comparison between the second downlink synchronization and cyclic prefix, CP, length, reporting information comprising information associated with the difference value to a base station. The control unit may be configured to control to receive, from the base station, information on a timing advance, TA, value derived based on the information associated with the difference value.

According to an embodiment, a base station of a wireless communication system may comprise a transmit/receive unit that transmits a plurality of SS/PBCH blocks to a terminal based on a plurality of beams of the base station, and a control unit controlling the transmit/receive unit. The control unit may be configured to receive reporting information comprising information associated with a difference value between first downlink synchronization based on a SS/PBCH block corresponding a first beam and second downlink synchronization based on a SS/PBCH block corresponding a second beam, from the terminal. The control unit may be configured to control transmitting information on a timing advance, TA, value derived based on the information associated with the difference value to the terminal. The information associated with the difference value may be comprised in the reporting information based on comparison between the second downlink synchronization and cyclic prefix, CP, length.

**[Advantageous Effects]**

According to an embodiment of the present disclosure, uplink synchronization and tracking can be achieved without uplink disconnection even when a beam changes.

In addition, according to an embodiment of the present disclosure, even if a path delay exceeding CP length occurs when changing the beam, uplink disconnection does not occur, thereby improving service quality.

In addition, according to an embodiment of the present disclosure, even if the path delay is long, a beam with a good RSRP can be utilized.

In addition, according to an embodiment of the present disclosure, data throughput can be improved while preventing wireless connection failure.

Effects obtainable in the present disclosure are not limited to the effects mentioned above, and other effects not mentioned will be clearly understood by those having ordinary knowledge in the art to which the present disclosure belongs from the description below.

**[Description of the Drawings]**

FIG. 1 is an example for explaining a type and definition of synchronization in a wireless communication system.

FIG. 2 is a diagram illustrating an example in which a plurality of SS/PBCH blocks are transmitted by using different beams.

FIG. 3 is an example illustrating a random access procedure of a terminal.

FIG. 4 illustrates an example of a beam change due to occurrence of a blockage on a serving beam in an environment where various path delays exist for each beam between a base station and a terminal.

FIG. 5 is an example illustrating an entire beam change process in NR standard.

FIG. 6 illustrates an example of a detailed procedure of a DL beam management process by using SSB according to an embodiment of the present disclosure.

FIG. 7 illustrates an example of beams of different paths according to an embodiment of the present disclosure.

FIG. 8 is an example illustrating a method of obtaining DL sync difference information for each Tx beam of a base station by a terminal according to an embodiment of the present disclosure.

FIG. 9 illustrates an example of a beam feedback operation procedure of a terminal according to an embodiment of the present disclosure.

FIG. 10 illustrates an example of a beam change operation procedure of a base station according to an embodiment of the present disclosure.

FIG. 11 is an example illustrating an entire beam change process according to an embodiment of the present disclosure.

FIG. 12 is a block diagram of a terminal according to an embodiment of the present disclosure.

FIG. 13 is a block diagram of a base station according to an embodiment of the present disclosure.

FIG. 14 is another example of a block diagram of a terminal and a base station according to an embodiment of the present disclosure.

**[Mode for Invention]**

Hereinafter, an embodiment of the present disclosure will be described in detail with reference to an accompanying drawing. In describing the embodiment of the present disclosure below, a description of technical content well known in the technical field belonging to the present disclosure and not directly related to the present disclosure will be omitted. This is to convey the gist of the present disclosure more clearly without obscuring it by omitting an unnecessary description.

For the same reason, some components in the accompanying drawing are exaggerated, omitted, or schematically illustrated. Additionally, a size of each component does not entirely reflect an actual size. In each drawing, identical or corresponding component is assigned the same reference number.

An advantage and feature of the present disclosure, and a method of achieving them will become apparent with reference to the embodiments described in detail below with the accompanying drawing. However, the disclosure is not limited to the embodiments described below and may be implemented in various different forms, and the present embodiments are only to ensure that the present disclosure is complete and to completely inform those having ordinary knowledge in the art to which the present disclosure pertains to scope of the technical idea, and the present disclosure is only defined by scope of the claims. Throughout the present disclosure, the same reference numerals refer to the same components. In addition, in describing the present disclosure, in case that it is determined that a detailed description of a related function or configuration may unnecessarily obscure the gist of the present disclosure, the detailed description will be omitted. In addition, the terms described below are terms defined in consideration of the function in the present disclosure, and may vary according to the intention or custom of a user or operator. Therefore, the definition should be made based on the content throughout the present disclosure.

In this case, it will be understood that each block of the process flowchart drawings and combinations of the flowchart drawings may be performed by computer program instructions. Since these computer program instructions may be mounted on a processor of a general-purpose computer, a special-purpose computer, or other programmable data processing equipment, the instructions, performed through the processor of the computer or other programmable data processing equipment, generate a means of performing functions described in flowchart block(s). Since these computer program instructions may also be stored in a computer-usable or computer-readable memory that may be directed toward a computer or other programmable data processing equipment to implement the function in a particular manner, the instructions stored in the computer-usable or computer-readable memory may also be capable of producing an article of manufacture involving the instruction means performing the function described in the flowchart block(s). Since the computer program instructions may also be mounted on the computer or other programmable data processing equipment, it is also possible for a series of operational steps to be performed on the computer or other programmable data processing equipment to generate a computer-executed process so that the instructions that perform the computer or other programmable data processing equipment provide steps for executing the functions described in the flowchart block(s).

In addition, each block may represent a portion of a module, segment, or a code including one or more executable instructions for executing a specified logical function(s). Additionally, it should be noted that in some alternative execution examples, it is also possible that functions mentioned in blocks occur out of order. For example, two blocks illustrated in succession may actually be performed substantially simultaneously, or the blocks may sometimes be performed in reverse order according to a corresponding function.

A 5G communication system should support a service that simultaneously satisfy various requirements so that the various requirements of a user and service provider may be freely reflected. Services considered for the 5G communication system include enhanced mobile broadband (eMBB), massive machine type communication (mMTC), ultra reliability low latency communication (URLLC), and so on.

The eMBB aims to provide a more improved data transmission rate than the existing data transmission rate supported by LTE, LTE-A, or LTE-Pro. For example, in the 5G communication system, the eMBB should be able to provide a peak data rate of 20 Gbps in downlink and a peak data rate of 10 Gbps in uplink from a perspective of one base station. In addition, the 5G communication system should provide the peak data rate and at the same time provide an increased user perceived data rate of a terminal. To meet these requirements, improvement in various transmission and reception technologies may be required, including more advanced multiple-antenna (or multi input multi output (MIMO)) transmission technology. In addition, in LTE system, signals are transmitted by using a transmission bandwidth of up to 20 MHz in the 2 GHz band, while the 5G communication system may meet the data transmission rate required by the 5G communication system by using a wider frequency bandwidth than 20 MHz in the frequency band of 3 to 6 GHz or above 6 GHz.

At the same time, the mMTC is being considered to support an application service such as Internet of Thing (IoT) in the 5G communication system. In order to efficiently provide the IoT, the mMTC requires support for access to a large scale of terminal within a cell, improved coverage of the terminal, improved battery time, and reduced cost of the terminal. Since the IoT provides a communication function by being attached to various sensors and various devices, it should be able to support a large number of terminals (e.g., 1,000,000 terminals/km2) within the cell. In addition, due to the nature of the service, the terminal supporting the mMTC is likely to be located in a shaded area that cannot be covered by the cell, such as a basement of a building, and therefore require wider coverage compared than other services provided by the 5G communication system. The terminal supporting the mMTC should be configured as a low-cost terminal, and since it is difficult to frequently replace a battery of the terminal, a very long battery life time such as 10 to 16 years is required.

Lastly, in a case of the URLLC, it is a cellular-based wireless communication service used for a mission-critical. For example, a service used for remote control for robot or machinery, industrial automation, unmanned aerial vehicle, remote health care, emergency alert, and so on may be considered. Therefore, the communication provided by the URLLC should provide very low latency and very high reliability. For example, a service supporting the URLLC should meet an air interface latency of less than 0.5 milliseconds and at the same time meet a requirement of a packet error rate of 10-5 or less. Therefore, for the service supporting the URLLC, the 5G system should provide a smaller transmit time interval (TTI) than other services, and at the same time, it should allocate a wide range of resources in the frequency band to ensure the reliability of a communication link.

Three services of the 5G communication system (hereinafter may be used interchangeably with the 5G system), namely the eMBB, the URLLC, and the mMTC, may be multiplexed and transmitted in one system. In this case, different transmission/reception techniques and transmission/reception parameters may be used between services to satisfy different requirements of each service.

In the LTE system, the 5G system, and so on, an orthogonal frequency division multiplexing (OFDM) method is adopted as one of the multiple access methods, and time-frequency resource for carrying data or control information for each user are usually allocated and operated so that they do not overlap, that is, orthogonality is established, so that each user's data or control information is distinguished.

Hereinafter, the LTE, LTE-A, or new radio (NR) (i.e., 5G) system will be described as an example, but an embodiment of the present disclosure may also be applied to other communication systems having a similar technical background or channel type. In addition, the present disclosure may be applied to other communication systems through some modifications without significantly departing from the scope of the present disclosure at the discretion of a person with skilled technical knowledge.

In the present disclosure, a base station is a subject that performs resource allocation of the terminal, and may be at least one of gNode B, eNode B, Node B, Base Station (BS), a wireless access unit, a base station controller, or a node on a network. The terminal may include a user equipment (UE), a mobile station (MS), a cellular phone, a smartphone, a computer, or a multimedia system capable of performing a communication function.

In the present disclosure, downlink (DL) is a wireless transmission path of a signal transmitted by the base station to the terminal, and uplink (UL) refers to a wireless transmission path of a signal transmitted by the terminal to the base station. In order to transmit and receive a signal between the base station and the terminal, it is necessary to synchronize the base station and the terminal.

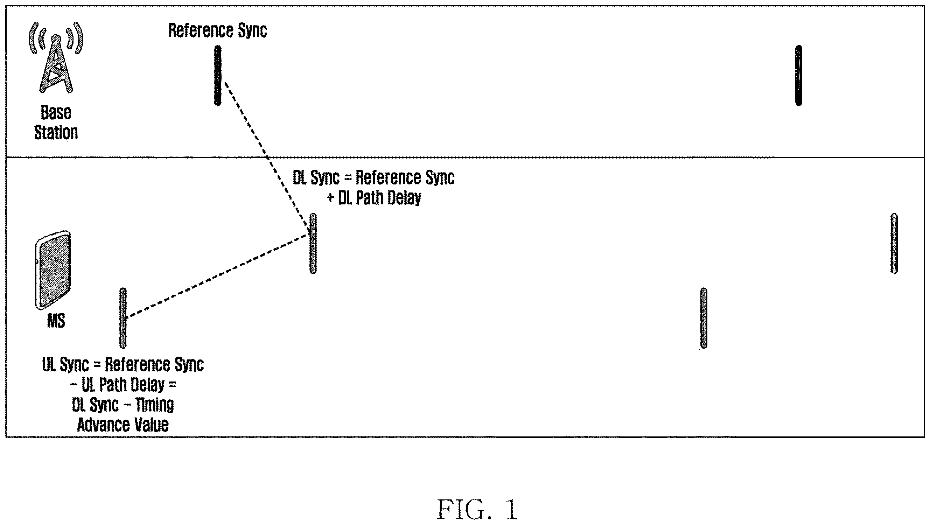

FIG. 1 is an example for explaining a type and definition of synchronization in a wireless communication system.

Referring to FIG. 1, synchronization may be divided into reference synchronization, downlink (DL) synchronization, and uplink (UL) synchronization. In addition, in the present disclosure, for convenience of explanation, the synchronization may be expressed as "Sync". However, use of this term does not limit technical scope of the present disclosure.

The reference synchronization may refer to synchronization that is a reference of a base station. All transmit/receive signals of the base station should be encoded/decoded based on the corresponding reference synchronization.

The DL synchronization may refer to synchronization that is a reference of DL operation of a terminal. The terminal may detect a radio boundary (i.e., the exact timing when a radio frame starts) and an OFDM symbol boundary (i.e., the exact timing when the OFDM symbol starts) through the DL synchronization process. The DL synchronization may mean synchronization (reference Sync + DL path delay) in which propagation delay of the DL path is added to the reference synchronization. Herein, the propagation delay may be interpreted as a path delay of a corresponding path.

Through the UL synchronization process, the terminal may identify the exact timing at which uplink data (e.g., PUSCH/PUCCH) should be transmitted. The UL synchronization may be defined as how fast UL transmission is performed compared to the DL synchronization (i.e., terminal synchronization). For example, the UL synchronization may be described by {DL Sync-Timing Advance value}. In addition, the UL synchronization may finally be defined as indicating how fast UL should be transmitted to meet reference synchronization (i.e., base station synchronization) compared to the DL synchronization (i.e., terminal synchronization), and the quantitative value of how fast UL should be transmitted may be defined as the propagation delay of the UL path as in DL (e.g., DL Sync - UL path delay). Herein, the UL path delay may be interpreted as a propagation delay of the UL path.

Meanwhile, in LTE and 5G system that uses an OFDMA method, cyclic prefix (CP) is inserted in front of each OFDM symbol to reduce interference between symbols. That is, a signal of a last section of a valid symbol section is copied and inserted in front of the valid symbol.

In general, a transmitted signal is in a form of a sine wave in which amplitude and phase change from one symbol to the next. With CP insertion, the amplitude and phase at the beginning of each symbol are the same as the amplitude and phase at the end. In a multi-path environment, receiving-end receives signals transmitted through a plurality of paths with different arrival times. In this case, when CP length is longer than delay spread, the receiving-end may still read information from one symbol at a time. However, when the CP is shorter than the longest path delay, some power of the previous OFDM symbol and transition to the current symbol are included in a symbol fast fourier transform (FFT), breaking subcarrier orthogonality and increasing error vector magnitude (EVM). That is, when the propagation delay (i.e., path delay) is longer than the CP length, the problem of broken DL sync/UL sync may occur.

Hereinafter, how the DL synchronization and the UL synchronization are obtained and tracked in a 3GPP 5G NR standard will be described in detail.

The terminal may obtain and track the DL Sync based on synchronization signal (SS)/physical broadcast channel (PBCH) block transmitted by the base station. Specifically, the terminal obtains the DL Sync by measuring the SS/PBCH block transmitted by the base station by itself, and continuously measure the difference from the previous DL Sync by measuring the SS/PBCH block transmitted periodically, and reflecting this in the DL Sync to track it. Herein, the SS/PBCH block refers to a physical layer channel block configured with Primary SS (PSS), Secondary SS (SSS), and PBCH, and is specifically as follows.

- PSS: A signal that serves as a reference for downlink time/frequency synchronization and provides some information of a cell ID.
- SSS: It serves as a reference for downlink time/frequency synchronization and provides the remaining cell ID information not provided by PSS. Additionally, it may serve as a reference signal for demodulation of PBCH.
- PBCH: Provides essential system information necessary for transmitting and receiving data channel and control channel of the terminal. The essential system information may include search space-related control information representing radio resource mapping information of the control channel, scheduling control information for a separate data channel transmitting system information, and the like.

- SS/PBCH block: The SS/PBCH block is configured by a combination of PSS, SSS, and PBCH. One or more SS/PBCH blocks may be transmitted within 5 ms, and each transmitted SS/PBCH block may be distinguished by an index. The SS/PBCH block may be used instead of terms such as SS block, SSB, or SS/PBCH.

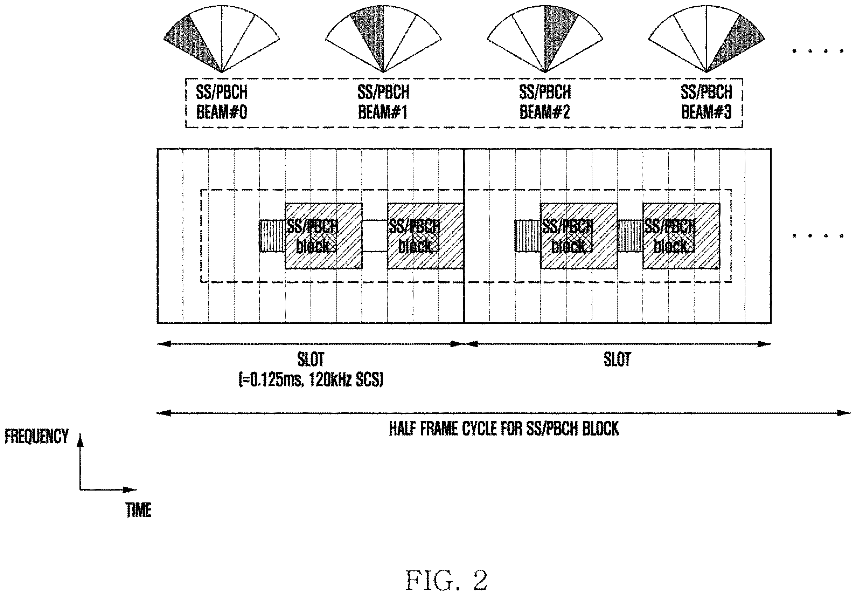

FIG. 2 is a diagram illustrating an example in which a plurality of SS/PBCH blocks are transmitted by using different beams. As illustrated in FIG. 2, SS/PBCH block in NR is configured with PSS, SSS, and PBCH, and may be transmitted in plurality to a terminal. Each SS/PBCH block may be transmitted to the terminal by using a different beam, respectively. For an example, the SS/PBCH block illustrated in FIG. 2 is transmitted by using beams #0, #1, #2, and #3, respectively.

Master information block (MIB) information transmitted through the PBCH may include information such as system frame number (SFN), most significant bit (MSB) of the SS/PBCH block index, half frame timing, subcarrier spacing for common control, SS/PBCH subcarrier offset, SIB1 PDCCH configuration, and total payload size. In particular, the MSB of the SS/PBCH block index enables transmission of a plurality of SS/PBCH blocks by providing MSB information of the SS/PBCH block index to support the plurality of SS/PBCH blocks. By securing such an SS/PBCH block index, the terminal may proceed with random access procedure required for initial access by transmitting a beam-based physical random access channel (PRACH) to a base station by using PRACH resource allocated for each SS/PBCH block.

The terminal may obtain DL synchronization by detecting the SS/PBCH block and decode system information. The terminal may identify a structure of an SS/PBCH block burst set based on the detected SS/PBCH block index, and may detect a symbol/slot/half-frame boundary accordingly. The number of a frame/half-frame to which the detected SS/PBCH block belongs may be identified by using SFN information and half-frame indication information.

Specifically, the terminal may obtain 10-bit SFN information from the PBCH. Among the 10-bit SFN information, 6 bits are obtained from the MIB, and the remaining 4 bits are obtained from PBCH Transport Block (TB).

Next, the terminal may obtain 1-bit half-frame indication information. In case that carrier frequency is less than or equal to 3 GHz, the half-frame indication information may be implicitly signaled by using PBCH DMRS. The PBCH DMRS indicates 3-bit information by using one of eight PBCH DMRS sequences. Therefore, in a case of L=4, among the 3 bits that may be indicated by using eight PBCH DMRS sequences, the 1 bit remaining after indicating an SSB index may be used for half-frame indication.

Lastly, the terminal may obtain the SS/PBCH block index based on DMRS sequence and PBCH payload. An SS/PBCH block candidate is indexed from 0 to L-1 according to time order within the SS/PBCH block burst set (i.e., half-frame). In a case where L=8 or 64, Least Significant Bit (LSB) 3 bits of the SS/PBCH block index may be indicated by using eight different PBCH DMRS sequences. In a case of L=64, MSB 3 bits of the S S/PBCH block index are indicated through the PBCH. In a case of L=2, LSB 2 bits of the SS/PBCH block index may be indicated by using four different PBCH DMRS sequences. In a case of L=4, among the 3 bits that may be indicated by using eight PBCH DMRS sequences, the 1 bit remaining after indicating the SS/PBCH block index may be used for half-frame indication.

Next, a process of obtaining and tracking UL synchronization is described in detail.

Initial UL synchronization may be obtained during a RACH process of initial access.

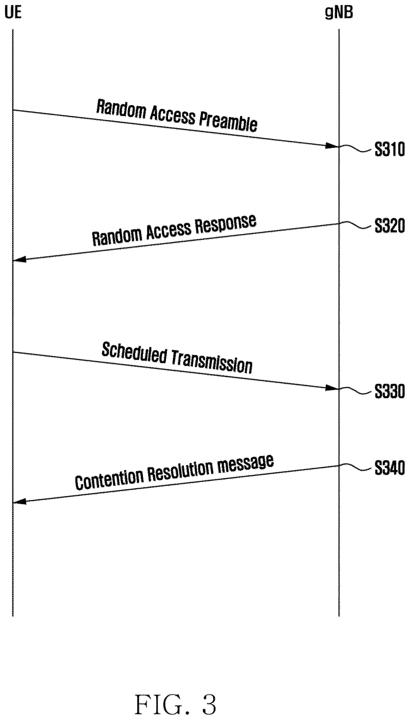

FIG. 3 is an example illustrating a random access procedure of a terminal.

Referring to FIG. 3, a terminal may detect a synchronization signal in a SS/PBCH block and decode PBCH. The terminal may obtain downlink synchronization based on the synchronization signal and the PBCH, and decode system information. The terminal may identify preamble format, time, and frequency resource based on the system information, and may transmit a random access preamble (hereinafter, interchangeable with Msg1) through PRACH (S310). After receiving the Msg1, a base station transmits PDCCH for transmission of Msg2 (hereinafter, interchangeable with a random access response (RAR)) to the terminal, and transmits the Msg2 to a resource allocated through the PDCCH (S320).

By calculating UL path delay based on the Msg1 received from the terminal, the base station may transmit a corresponding timing advance value to the terminal by including it in the Msg2. Through this, the terminal may obtain initial UL synchronization. Thereafter, the terminal informs the base station that the corresponding Msg2 has been successfully received by transmitting Msg3 (hereinafter, interchangeable with scheduled transmission) to the base station (S330), and thereafter, the base station informs that contention has been resolved by transmitting a contention resolution message on PDSCH (S340).

The base station should control the terminal to track UL Sync by transmitting an appropriate timing advance value to the terminal when the terminal connects or moves for the first time, especially when the beam changes in a beamforming-based system, and this may be referred to as UL Sync tracking.

By having the base station measure a timing offset from DMRS of a UL signal (e.g., PUSCH), the UL Sync tracking after the initial UL synchronization may allow the terminal to track UL synchronization by calculating the timing advance (TA) value, and transmitting it to the terminal through a timing advance command medium access control (MAC) control element (CE).

A method of controlling timing advance through MAC CE is examined in more detail.

The timing advance command MAC CE may be indicated for a timing advance group (TAG).

The timing advance group (TAG) may mean a serving cell group that is configured by RRC and uses the same timing reference cell and the same timing advance value for a cell in which UL is configured. A timing advance group including SpCell of MAC entity is referred to as a primary timing advance group (PTAG), while the term secondary timing advance group (STAG) refers to another TAG.

The timing advance command MAC CE may be identified by a MAC subheader having LCID. It may have a fixed size and may be configured as a single octet, defined as follows:

- TAG identity (TAG ID): This field represents the TAG identity (ID) of the mentioned TAG. A TAG including SpCell has a TAG identity 0, and the length of this field is 2 bits.
- Timing Advance Command: This field represents an index value TA (0, 1, 2, ..., 63) used to control the amount of timing adjustment that MAC entity should apply. The length of this field is 6 bits.

The terminal may be provided with a value $N_{TA,offset}$ of the timing advance offset for the serving cell by n-TimingAdvanceOffset for the serving cell. In a case where the terminal is not provided with the n-TimingAdvanceOffset for the serving cell, the terminal may determine a default value. In a case where two UL carriers for the serving cell are configured in the terminal, the same timing advance offset value $N_{TA,offset}$ may be applied to both carriers.

The terminal that has received the timing advance command for the TAG may adjust uplink timing for PUSCH/SRS/PUCCH transmission in all serving cells of the TAG based on i) the value $\boldsymbol{N_{TA,offset}}$ that the terminal expects to be the same for all serving cells of the TAG, and ii) the received timing advance command where the uplink timing for PUSCH/SRS/PUCCH transmission is the same for all serving cells of the TAG.

For SCS at $2^\mu \cdot 15\text{kHz}$, the timing advance command for the TAG may indicate a change in UL timing relative to the current uplink timing for the TAG as a multiple of $16 \cdot 64 \cdot T_c/2^\mu$.

In a case of a random access response or an absolute timing advance command MAC CE, the timing advance command $\boldsymbol{T_A}$ for the TAG may indicate $N_{TA}$ values by an index value of $\boldsymbol{T_A}$ = 0, 1, 2, ..., 3846. Herein, the amount of timing alignment for a TAG having the SCS of $2^\mu \cdot 15\text{kHz}$ is $N_{TA} = T_A \cdot 16 \cdot 64/2^\mu$. $N_{TA}$ is relative to the SCS of a first uplink transmission from the UE after receiving the random access response or the absolute timing advance command MAC CE.

In other cases, the timing advance command $T_A$ for the TAG indicates adjusting $N_{TA\_old}$, which is the current $N_{TA}$ value, to $N_{TA\_new}$, which is the new $N_{TA}$ value, by an index value of $T_A$ = 0, 1, 2, ..., 63. Herein, for the SCS of $2^\mu \cdot 15$ kHz, it is

$$N_{TA\_new} = N_{TA\_old} + (T_A - 31) \cdot 16 \cdot 64/2^\mu.$$

Adjusting the $N_{TA}$ value to a positive or negative number means advancing or delaying the uplink transmission timing for the TAG by the corresponding amount, respectively.

In general, the base station processes multiple terminals, and the base station needs to ensure that a UL signal from all terminals must be aligned with a common receiver timer of the base station. Therefore, it is necessary to adjust Tx timing (UL timing) of each terminal. When UL synchronization is not properly set by the base station, not only the reception quality of the UL signal transmitted from the terminal decrease significantly, but the link between the base station and the terminal may be disconnected.

Since base station communicates with an omni-directional radiation pattern in LTE or 5G NR band below 6GHz, a difference in path delay compared to the initial path occurs only when the terminal moves, and even when the difference in path delay occurs, the difference in path delay caused by the terminal movement may not be significant. In this case, it may not be a problem to use the existing timing advance control method that measures the timing offset in the UL signal (e.g., PUSCH) and updates the TA value for UL Sync through the timing advance command MAC CE.

However, in a network using a directional beam, such as in a high frequency band above 6 GHz of 5G NR, a large path delay may occur not only by the movement of the terminal but also by beam change.

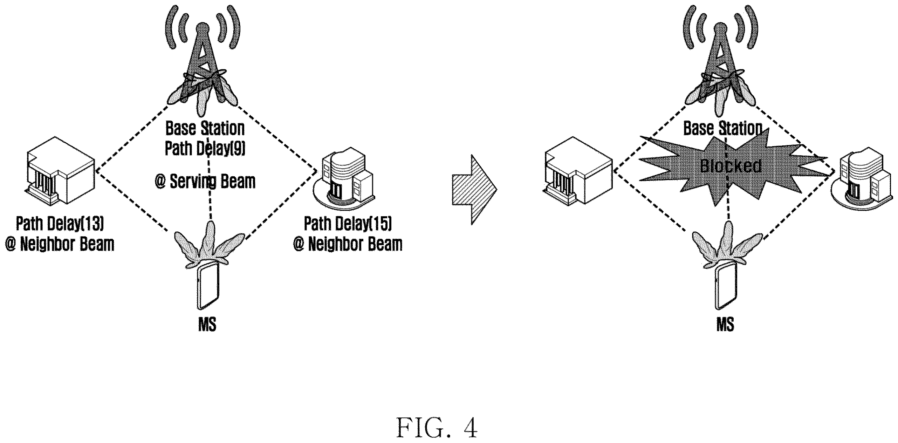

FIG. 4 illustrates an example of a beam change due to occurrence of a blockage on a serving beam in an environment where various path delays exist for each beam between a base station and a terminal.

As illustrated in FIG. 4, there may be a plurality of paths having different path delays for each beam between the base station and the terminal. When a serving beam is blocked for reasons such as an obstacle or the like and the quality falls below a threshold, a beam change to a neighbor beam may be performed. In this case, since the path delay is different for each path, a large path delay difference may occur even due to the beam change. When the path delay is changed to a neighbor beam having a larger path delay compared to the existing serving beam path, UL Sync may be damaged. In particular, when the propagation delay (i.e., path delay) of the beam to be changed is longer than a CP length, orthogonality of an OFDM symbol may be broken, causing EVM to increase and UL sync to be broken.

For convenience of description, FIG. 4 illustrates an example in which a path delay of neighbor beams is longer than that of the serving beam, but of course, there may also be a case in which a path delay of the neighbor beam is shorter than that of the serving beam.

Therefore, a method of controlling timing advance, that is, UL sync, is needed to compensate for the path delay that may occur due to the beam change. However, in the current 3GPP 5G NR standard has a problem in that it cannot respond to a large Sync error that may occur due to the beam change.

Before describing a method and/or embodiment proposed in the present disclosure, a beam feedback operation defined in the conventional standard will be described.

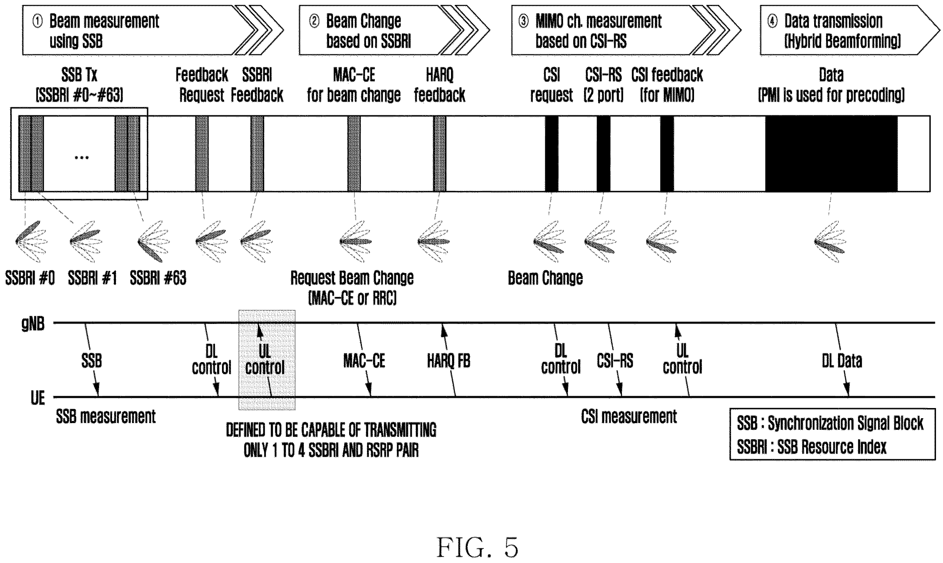

FIG. 5 is an example illustrating an entire beam change process in NR standard.

In FIG. 5, a beam management process using SSB (1), a beam change request process based on SSBRI reported by a terminal to a base station (2), a channel measurement process based on CSI-RS received through the changed beam (3), and a DL data transmission process (4) are illustrated. According to the current standard, it is defined to transmit up to four SSBRI and RSRP pairs in the beam management process using the SSB.

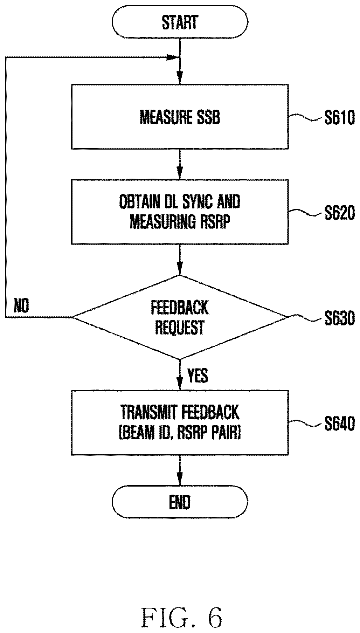

FIG. 6 illustrates an example of a detailed procedure of a DL beam management process 1 by using SSB according to an embodiment of the present disclosure.

A terminal may measure SSB received from a base station (S610). The base station may transmit a plurality of SSBs to the terminal through different transmission (Tx) beams.

Configuration for a beam report by using the SSB may be performed in an RRC connected state. SSB resources used for beam management may be set based on configuration information (e.g., CSI-ResourceConfig IE) transmitted from the base station. The configuration information may include a list (e.g., CSI-SSB-ResourceSetList) of the SSB resources used for beam management and reporting in one resource set. Herein, an SSB resource set may be set to {SSBx1, SSBx2, SSBx3, SSBx4, ...}. SSB index may be defined from 0 to 63. For example, the SSB index 0, SSB index 1, ..., and SSB index 63 may correspond to different Tx beams (e.g., beam #0, beam #1, ..., and beam #63) of the base station, respectively.

The terminal may measure RSRP for the SSB resources and obtain DL Sync (S620).

The terminal may determine whether a feedback request has been received from the base station (S630). For example, in case that a reportQuantity of CSI report configuration information (e.g., CSI-reportConfig) is set as a parameter (e.g., ssb-Index-RSRP) that indicates reporting on SSB resource indicator (SSBRI) and reference signal received power (RSRP), the terminal may determine that the feedback request has been received.

In case that the terminal receives the feedback request from the base station, the terminal may transmit feedback information to the base station (S640). The feedback information may include a beam ID (e.g., SSBRI) and RSRP Pair corresponding thereto.

As described in FIGS. 5 and 6, only the beam ID (e.g., SSBRI) and RSRP are included in beam-related feedback information reported to the base station by the terminal triggering a beam change. Therefore, the base station has no choice but to select a beam based only on RSRP signal strength. That is, in case that the base station selects a beam based only on the RSRP signal strength, a beam with a large path delay may be selected, which may cause a problem in UL Sync. For example, even when a beam with the best RSRP is selected, in case that the path delay of the corresponding beam is very large and exceeds a CP length, orthogonality of an OFDM symbol may be broken, causing an increase in EVM and problems with UL sync.

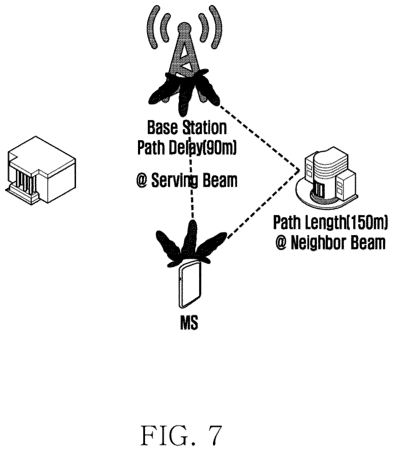

FIG. 7 illustrates an example of beams of different paths according to an embodiment of the present disclosure. Although FIG. 7 illustrates two paths as an example for convenience of description, three or more paths may exist in a beamforming-based communication system.

Referring to FIG. 7, an example is illustrated in which a path length of a serving beam is 90 meters and a path length of a neighbor beam is 150 meters. Since the path length of each beam is different, each beam may have a different path delay.

Hereinafter, in the present disclosure, a method for updating/tracking UL synchronization (i.e., a method for controlling timing advance) while preventing wireless link disconnection in a multi-path environment where path delay values of each path may be different is proposed. In addition, a method is proposed to utilize a beam with good RSRP even if the path delay is long. Specifically, the present disclosure proposes a method in which a terminal measures a DL Sync difference between the serving beam and the neighbor beam, and reports information on the DL Sync difference to a base station through beam-related feedback (e.g., beam CSI reporting). In addition, a method is proposed in which the base station may respond to a rapid UL Sync error experienced when changing the beam by transmitting a timing advance value determined based on the reported value to the terminal along with a beam change request.

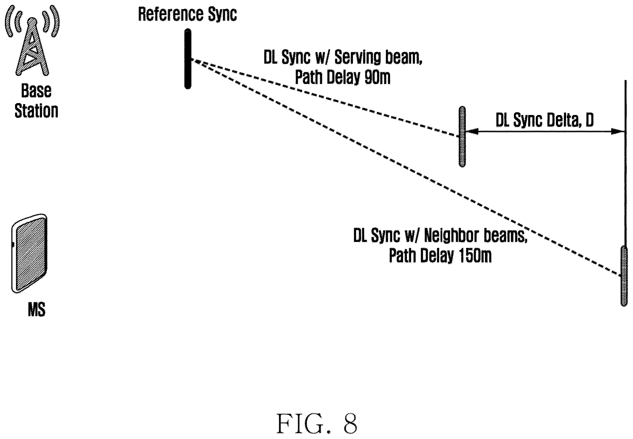

FIG. 8 is an example illustrating a method of obtaining DL sync difference information for each Tx beam of a base station by a terminal according to an embodiment of the present disclosure.

Referring to FIG. 8, a terminal may obtain DL Sync for each Tx beam of a base station. That is, the terminal may obtain the DL sync of a serving beam and the DL Sync of a neighbor beam, respectively. As described above, the terminal may receive SSBs transmitted through different Tx beams of the base station and obtain the DL sync based on SSB corresponding to each beam. In addition, the terminal may measure the difference between the DL Sync of the serving beam (e.g., first beam) and the DL Sync of the neighbor beam (e.g., second beam). The terminal may directly store the measured difference value (e.g., DL Sync Delta), or convert it into a timing advance value and store it.

In FIG. 8, for convenience of description, the description focuses on one serving beam and one neighbor beam, but this example does not limit the technical scope of the present disclosure. Therefore, it goes without saying that it may be applied even in a situation where two or more neighbor beams exist.

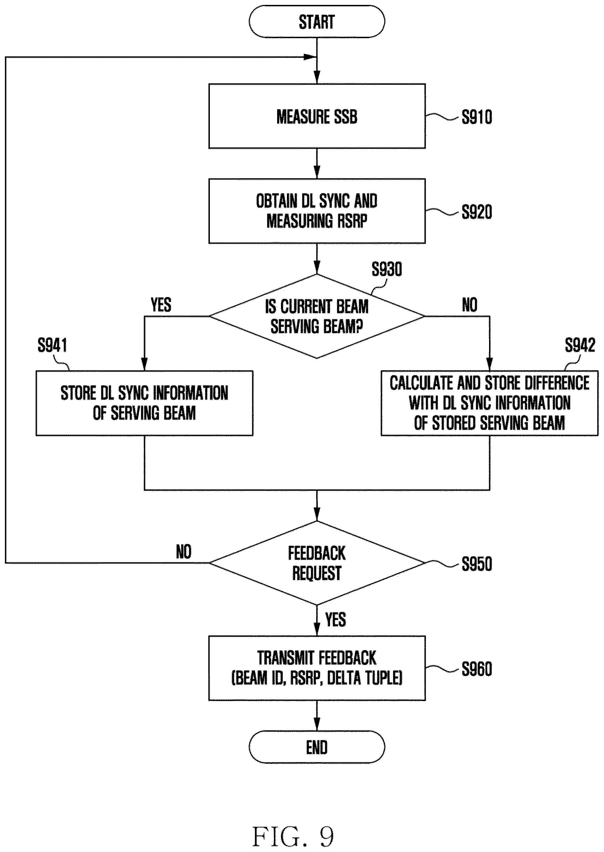

FIG. 9 illustrates an example of a beam feedback operation procedure of a terminal according to an embodiment of the present disclosure.

A terminal may receive SSB from a base station and measure the received SSB (S910). Herein, the SSB may mean an SS/PBCH block, and each SSB (SS/PBCH block) may include a synchronization signal (SS) and a physical broadcast channel (PBCH). Also, each SSB may correspond to different beams of the base station. That is, the base station may transmit the SSB to the terminal through different Tx beams.

The terminal may obtain DL synchronization and measure RSRP based on the SSB (S920).

The terminal may determine whether the current beam is a serving beam (e.g., first beam) (S930).

In case that the current beam is a serving beam, DL Sync information of the serving beam may be obtained and stored (S941). Meanwhile, in case that the current beam is not a serving beam (e.g., second beam), a difference between the DL Sync of the previously stored serving beam and the DL Sync of the current beam may be calculated and stored (S942). In other words, a difference value between the DL Sync (e.g., first DL Sync) based on the SSB corresponding to the serving beam and the DL Sync (e.g., second DL Sync) based on the SSB corresponding to the current beam (e.g., second beam, not the serving beam) may be obtained and stored.

For example, the operation of the steps S910 to S942 may be performed repeatedly as many times as the set number of SSB resources. That is, the terminal may receive a plurality of SSBs based on a plurality of beams of the base station, and each SSB may correspond to a different Tx beam. In addition, the terminal may measure DL Sync and RSRP value for each SSB.

The terminal may determine whether a feedback request has been received from the base station (S950).

For example, the terminal may receive configuration information (e.g., CSI-reportConfig IE) associated with feedback reporting from the base station, and in a case where "reportQuantity" included in the configuration information is set as a parameter (e.g., ssb-Index-RSRP) representing reporting on SSBRI and RSRP (Reference Signal Received Power), the terminal may determine that the feedback request has been received.

For another example, a new "reportQuantity" value may be defined to explicitly indicate feedback reporting (e.g., information associated with DL Sync difference value) related to the DL Sync. For an example, in "reportQuantity" within the configuration information (e.g., CSI-ReportConfig IE) associated with the feedback reporting obtained from the base station, a parameter (e.g., ssb-Index-RSRP-DLSyncdelta) indicating reporting of information associated with SSBRI, RSRP, and DL Sync difference value may be set, and in this case, the terminal may determine that the feedback request has been received.

In case that the terminal receives the feedback request from the base station, the terminal may transmit feedback information (i.e., reporting information) to the base station (S960). The feedback information may be transmitted based on an uplink channel (e.g., PUCCH and PUSCH). The feedback information may include Beam ID (e.g., SSBRI), RSRP, and information (e.g., DL Sync Delta Tuple) associated with the difference value between the DL Sync of the serving beam and the DL Sync of the current beam. By transmitting the information (e.g., DL Sync Delta Tuple) associated with the difference value between the DL Sync of the serving beam and the DL Sync of the current beam, it may tell how many UL Sync errors may occur when the base station applies the beam.

For example, the information (e.g., DL Sync Delta Tuple) associated with the difference value may be configured as the difference value (i.e., delta) between the DL sync of the serving beam and the DL sync of the neighbor beam. For an example, the difference value may be expressed as |(DL path delay of serving beam)-(DL path delay of neighbor beam)|.

For a specific example, according to the current standard, the terminal may report up to four SSBRI and RSRP pairs. Therefore, each DL sync difference value of SSBs corresponding to the reported SSBRI may be reported to the base station. For example, when the number of reported SSBRIs is n, the information associated with the difference value may include DL Sync delta 1 between the serving beam and a neighbor beam #1, DL Sync delta 2 between the serving beam and a neighbor beam #2, ..., and DL Sync delta n between the serving beam and a neighbor beam #n.

For another example, based on the DL sync of the serving beam, a range of the difference value (i.e., Delta) may be divided into N sections, and an index corresponding to each section may be pre-defined. For an example, the corresponding relationship between the index and Delta range may be pre-defined as illustrated in Table 1. Alternatively, the corresponding relationship of the Table 1 may be set to higher layer signaling (e.g., RRC). Additionally, an index corresponding to the obtained difference value may be included and reported in the reporting information. The Table 1 is only an example for convenience of description and does not limit the technical scope of the present disclosure. Therefore, the range of the difference value may be further subdivided and may be fed back to 3 bits or more, or resolution of the range may be lowered and the range of the difference value may be fed back to less than 2 bits. Through this, the number of bits required for feedback may be reduced by comparing the DL Sync delta value feedback method.

**[Table 1]**

| DL sync delta index | DL sync delta value range |
|---|---|
| 0 | 0<=Delta<a |
| 1 | a<=Delta<b |
| 2 | b<=Delta<c |
| 3 | c<=Delta |

For another example, instead of directly reporting the difference value to the base station, the terminal may determine that new TA control is necessary based on the measured difference value and explicitly request that the base station send a new TA value by using 1-bit signaling. In this case, the feedback information may include 1-bit information indicating that a SS/PBCH block index corresponding to a second beam, the RSRP value, and the TA value need to be updated. The base station may know that the new TA value should be transmitted to the terminal when changing to the second beam through the 1-bit information. The terminal may compare the DL sync of a beam (e.g., second beam) other than the serving beam with the CP length, and based on this, report feedback information including information (e.g., difference value, index corresponding to the difference value, and the like) associated with the difference value to the base station.

For example, the terminal may select an SSB resource having the best RSRP value among SSB resources. In case that the DL Sync value obtained based on the selected SSB resource exceeds the CP length, information associated with the difference value may be reported to the base station. In other words, the terminal may transmit feedback information including i) a beam ID (e.g., SSB resource identifier) corresponding to the selected SSB resource, ii) an RSRP value measured based on the selected SSB resource, and iii) information associated with a difference value between DL Sync obtained based on the selected SSB resource and DL Sync obtained based on the SSB corresponding to the serving beam to the base station. For an example, the information associated with the difference value may include the difference value itself, a value converted from the difference value to a specific time unit, or an index corresponding to the difference value. When the DL Sync value obtained based on the selected SSB resource does not exceed the CP length, only SSBRI and RSRP may be reported as in a conventional method.

For another example, according to the current standard, the terminal may report up to four SSBRI and RSRP pairs. The reported SSBRI may be determined according to the RSRP measured based on the SSB resource. Therefore, up to four pieces of information associated with the DL sync difference value corresponding to the reported SSBRI may also be reported. Even in this case, information associated with the DL sync difference value may be reported only for a beam having DL Sync exceeding the CP length. For a specific example, it is assumed that SSB #1, SSB #2, SSB #3, and SSB #4 are reported. Among these, DL sync of a beam associated with SSB #2 and SSB #3 may exceed the CP length, and DL sync of a beam associated with SSB #1 and SSB #4 may not exceed the CP length. In this case, the terminal may report {SSB#1 and RSRP for SSB#1}, {SSB#2, RSRP for SSB#2, and DL sync delta #2}, {SSB#3, RSRP for SSB#3, and DL sync delta #3}, and {SSB#4 and RSRP for SSB#4} to the base station.

For another example, the terminal may select one or more candidate beams among a plurality of beams of the base station based on the RSRP value measured for the SSB. In other words, the terminal may select SSB candidates having an RSRP value greater than or equal to a specific value based on the measured RSRP value. The specific value may be pre-defined or set through higher layer signaling. That is, in order to select a beam of good quality, the SSB candidates may be selected based on the RSRP value. And among the SSB candidates (i.e., candidate beams), SSBs having a smaller value in the DL Sync difference with the serving beam may be selected. For an example, in case that one SSBRI is reported, the terminal may select an SSB (i.e., a beam corresponding to the SSB) having the smallest value in the DL Sync difference with the serving beam among the SSB candidates, and report an index (e.g., SSBRI) corresponding to the selected SSB, RSRP, and information (e.g., a difference value, a value converted from the difference value to a specific time unit, or an index corresponding to the difference value, and the like) associated with the DL Sync difference value. For an example, in case that a plurality of SSBRIs are reported, the terminal may select the SSB among the SSB candidates in order of having a smaller value in the DL Sync difference with the serving beam. Through this, it is possible to report on a beam with good RSRP while maintaining the DL sync of the serving beam similar.

For another example, in case that a fast uplink transmission is required, in order to filter a beam with a path delay exceeding the CP length, beams exceeding a threshold value for path delay may be first filtered (excluded) and SSBRI and RSRP for a beam with the best RSRP value among the remaining beams may be reported. In addition, information associated with the difference value corresponding to the corresponding beam may be reported together. For an example, the threshold value for the path delay may be pre-defined or set through higher layer signaling (e.g., RRC). In addition, the threshold value may be set/defined as a CP length or a percentage (%) (e.g., 90%) of the CP length.

The terminal may receive information on a TA value derived based on information (e.g., DL Sync Delta Tuple) associated with the difference value from the base station, and track/update UL sync by using the TA value. For example, information on the TA value may be transmitted by being included in a MAC (medium access control) CE (control element) command including information indicating a change from the serving beam to another beam.

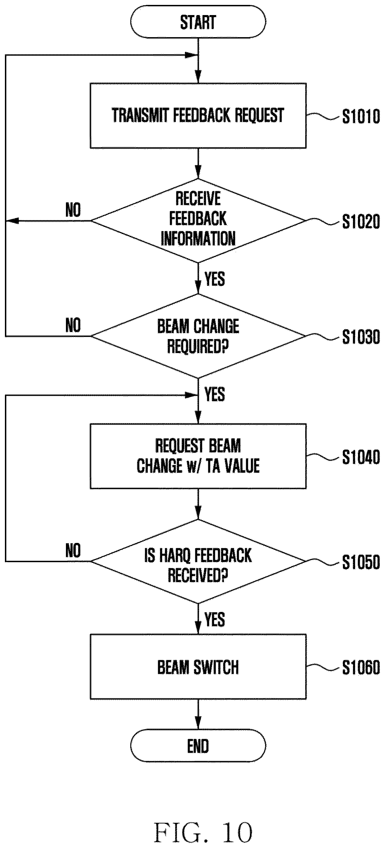

FIG. 10 illustrates an example of a beam change operation procedure of a base station according to an embodiment of the present disclosure.

A base station may transmit a beam-related feedback request to a terminal (S 1010).

For example, the base station may transmit configuration information (e.g., CSI-reportConfig IE) associated with feedback reporting to the terminal, and transmit "reportQuantity" included in the configuration information to the terminal by being configured as a parameter (e.g., ssb-Index-RSRP) representing reporting on SSBRI and RSRP (Reference Signal Received Power).

For another example, a new "reportQuantity" value may be defined to explicitly indicate feedback reporting related to DL Sync (e.g., information associated with DL Sync difference value). For an example, the base station may configure a parameter (e.g., ssb-Index-RSRP-DLSyncdelta) indicating reporting on information associated with SSBRI, RSRP, and DL Sync difference value in "reportQuantity" within configuration information (e.g., CSI-ReportConfig IE) associated with feedback reporting and transmit it to the terminal.

The base station may receive feedback information (i.e., reporting information) from the terminal in response to the feedback request (S1020). The feedback information may be received based on an uplink channel (e.g., PUCCH and PUSCH). The feedback information may include Beam ID (e.g., SSBRI), RSRP, and information (e.g., DL Sync Delta Tuple) associated with a difference value between DL Sync of a serving beam and DL Sync of the current beam.

For example, the information (e.g., DL Sync Delta Tuple) associated with the difference value may be configured as the difference value (i.e., delta) between the DL sync of the serving beam and DL sync of a neighbor beam. The difference value may be expressed as |(DL path delay of serving beam)-(DL path delay of neighbor beam)|.

For another example, the information (e.g., DL Sync Delta Tuple) associated with the difference value may include an index corresponding to the difference value (i.e., delta) between the DL sync of the serving beam and the DL sync of the neighbor beam. The range of the difference value (i.e., delta) is divided into N sections based on the DL sync of the serving beam, and the index corresponding to each section may be pre-defined as in the example in Table 1 above. Alternatively, a corresponding relationship of Table 1 may be set to higher layer signaling (e.g., RRC).

For another example, the information (e.g., DL Sync Delta Tuple) associated with the difference value may be configured as 1-bit information indicating that the TA value needs to be updated. In this case, the feedback information may include 1-bit information indicating that an index of a SS/PBCH block corresponding to a second beam, an RSRP value, and the TA value need to be updated.

The information associated with the difference value may be included in the feedback information based on a comparison between DL sync of a beam (e.g., second beam) other than the serving beam and a CP length. For example, in case that the DL sync (e.g., second DL sync) of the beam (e.g., second beam) other than the serving beam exceeds the CP length, the information associated with the difference value may be included in the feedback information.

For example, an SSB resource having the best RSRP value may be selected among a plurality of SSB resources, and in case that the DL Sync value obtained based on the selected SSB resource exceeds the CP length, the information associated with the difference value may be included in the feedback information. That is, the base station may receive feedback information including i) a beam ID (e.g., SSB resource identifier) corresponding to the selected SSB resource, ii) an RSRP value measured based on the selected SSB resource, and iii) information associated with a difference value between DL Sync based on the selected SSB resource and DL Sync based on the SSB corresponding to the serving beam from the terminal. For an example, the information associated with the difference value may include the difference value itself, a value converted from the difference value to a specific time unit, or an index corresponding to the difference value.

For another example, one or more candidate beams among a plurality of beams of the base station may be determined based on a reference signal received power (RSRP) value corresponding to each of a plurality of SS/PBCH blocks transmitted by the base station. In other words, SSB candidates having an RSRP value greater than or equal to a specific value may be selected based on the measured RSRP value. The specific value may be pre-defined or configured through higher layer signaling. SSBs (i.e., beam corresponding to SSB) having a smaller value among difference values between DL sync associated with each of the one or more candidate beams and the DL Sync of the serving beam may be selected. For an example, an index (e.g., SSBRI) corresponding to an SSB with the smallest value in the DL Sync difference, RSRP, and information associated with the DL Sync difference value (e.g., a difference value, a value converted from the difference value to a specific time unit, or an index corresponding to the difference value) may be received.

The base station may determine whether the beam needs to be changed based on the received feedback information (S1030). For example, it may be determined whether a beam change is necessary based on the RSRP. For an example, in case that the received RSRP value is smaller than a specific threshold value, it may be determined that the beam change is necessary.

When it is determined that the beam change is necessary, the base station may transmit a beam change request to the terminal (S1040). In this case, the base station may transmit information on the TA value calculated/derived based on the information (e.g., DL Sync Delta Tuple) associated with the difference value of the DL Sync, together with the beam change request.

For example, the beam change request may be transmitted by using TCI state activation/deactivation MAC CE. In this case, the TCI state activation/deactivation MAC CE may include a new TCI state and a TA value (index) corresponding to the TCI state. In addition, the TCI state activation/deactivation MAC CE may further include a serving cell ID and a BWP ID.

When receiving HARQ feedback for the corresponding beam change request from the terminal (S1050), the base station may perform the beam switch (change) after a certain time (e.g., 3 ms) (S1060).

The terminal may adjust UL synchronization by reflecting the TA included in the beam change request and may apply the adjusted UL synchronization to UL transmission, thereby preventing UL Sync error from occurring due to the beam change.

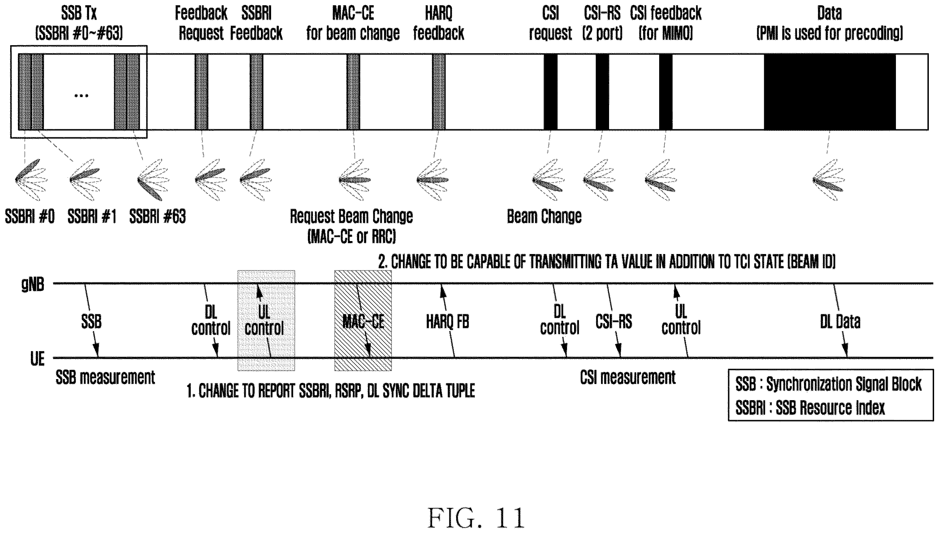

FIG. 11 is an example illustrating an entire beam change process according to an embodiment of the present disclosure.

As described above, in FIG. 11, a beam management process using SSB (1), a beam change request process based on SSBRI reported by a terminal to a base station (2), a channel measurement process based on CSI-RS received through the changed beam (3), and a DL data transmission process (4) is illustrated.

Compared to FIG. 5, according to an embodiment of the present disclosure, the terminal may report information (e.g., DL sync delta value) associated with DL sync difference value together with SSBRI and RSRP to the base station. In addition, the base station may calculate TA in consideration of UL path length difference that may occur when changing a beam based on information (e.g., DL sync delta value) associated with the reported DL sync difference value, and transmit a beam change request MAC CE to the terminal by including information on a TA value along with a TCI State (Beam ID). Through this, even if a change from the base station to a beam having a path delay value exceeding a CP length is indicated, the TA value for the corresponding beam is also indicated, enabling UL sync tracking and TA update of the terminal.

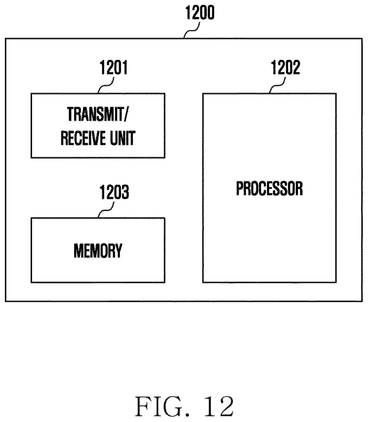

FIG. 12 is a block diagram of a terminal according to an embodiment of the present disclosure.

Referring to FIG. 12, a terminal 1200 may include a transmit/receive unit 1201, a control unit (processor) 1202, and a storage unit (memory) 1203. The transmit/receive unit 1201, the control unit 1202, and the storage unit 1203 of the terminal 1200 may operate according to a method and/or embodiments proposed in the present disclosure. However, a component of the terminal 1200 according to an embodiment is not limited to the above-described example. According to another embodiment, the terminal 1200 may include more or fewer components than the above-described components. Furthermore, in a certain case, the transmit/receive unit 1201, the control unit 1202, and the storage unit 1203 may be implemented in a form of one chip.

The transmit/receive unit 1201 may be configured as a transmit unit and a receive unit according to another embodiment. The transmit/receive unit 1201 may transmit and receive a signal to and from a base station. The signal may include control information and data. To this end, the transmit/receive unit 1201 may be configured with an RF transmitter that up-converts and amplifies frequency of a transmitted signal, and an RF receiver that amplifies the received signal with low noise and down-converts the frequency. In addition, the transmit/receive unit 1201 may output a signal by receiving it through a wireless channel to the control unit 1202, and transmit the signal outputted from the control unit 1202 through the wireless channel.

The control unit 1202 may control a series of processes in which the terminal 1200 may operate according to the above-described embodiment of the present disclosure. For example, according to an embodiment of the present disclosure, the control unit 1202 may control a process in which the terminal obtains DL sync for each TX beam of the base station, calculates a DL sync difference value between a serving beam and neighbor beams, and reports this to the base station. To this end, the control unit 1202 may include at least one processor. For example, the control unit 1202 may include a communication processor (CP) that performs control for communication and an application processor (AP) that controls a higher layer such as an application program.

The storage unit 1203 may store a DL sync difference value between the serving beam and the neighbor beam calculated by the terminal 1200 and/or information related to the DL sync difference, and may have an area for storing data required for controlling the control unit 1202 and data generated when the control unit 1202 controls.

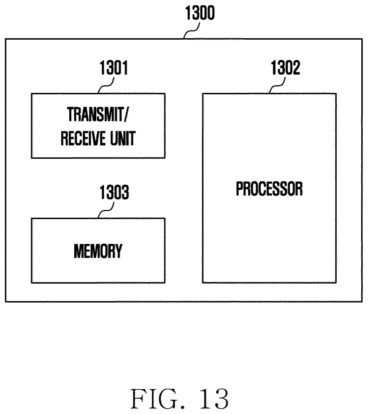

FIG. 13 is a block diagram of a base station according to an embodiment.

Referring to FIG. 13, a base station 1300 may include a transmit/receive unit 1301, a control unit (processor) 1302, and a storage unit (memory) 1303. The transmit/receive unit 1301, the control unit 1302, and the storage unit 1303 of the base station 1300 may operate according to a method and/or embodiments proposed in the present disclosure. However, a component of the base station 1300 according to an embodiment is not limited to the above-described example. According to another embodiment, the base station 1300 may include more or fewer components than the above-described components. Additionally, in a certain case, the transmit/receive unit 1301, the control unit 1302, and the storage unit 1303 may be implemented in a form of one chip.

The transmit/receive unit 1301 may be configured as a transmit unit and a receive unit according to another embodiment. The transmit/receive unit 1301 may transmit and receive a signal to and from a terminal. The signal may include control information and data. To this end, the transmit/receive unit 1301 may be configured with an RF transmitter that up-converts and amplifies frequency of a transmitted signal, and an RF receiver that amplifies the received signal with low noise and down-converts the frequency. In addition, the transmit/receive unit 1301 may output a signal by receiving it through a wireless channel to the control unit 1302, and transmit the signal outputted from the control unit 1302 through the wireless channel.

The control unit 1302 may control a series of processes so that the base station 1300 may operate according to the above-described embodiment of the present disclosure. For example, the controller 1302 may calculate a TA value based on DL sync difference value included in the beam-related reporting received from the terminal according to an embodiment of the present disclosure, and may control to transmit beam change request information including information (e.g., TCI state) on a new beam and the TA value to the terminal. To this end, the control unit 1302 may include at least one processor. For example, the control unit 1302 may include a communication processor (CP) that performs control for communication and an application processor (AP) that controls a higher layer such as an application program.

The storage unit 1303 may store the DL sync difference value, beam-related reporting information, and the like received from the terminal, and may have an area for storing data required for control of the control unit 1302 and data generated when the control unit 1302 controls.

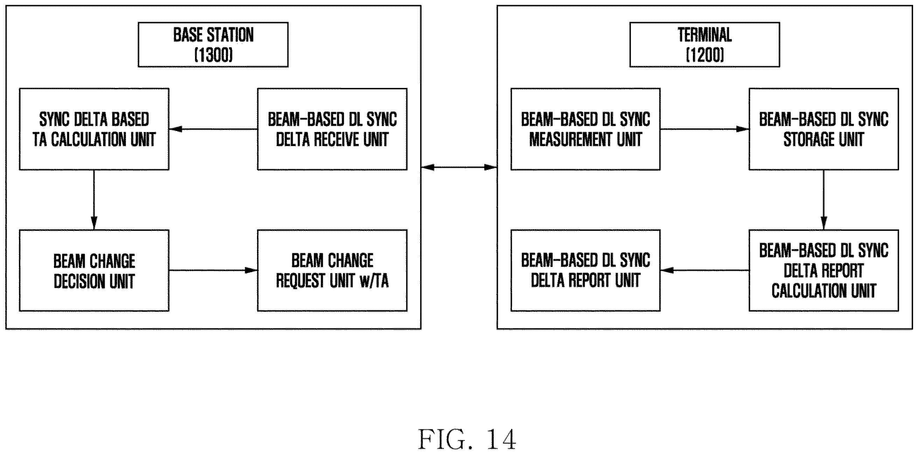

FIG. 14 is another example of a block diagram of a terminal and a base station according to an embodiment of the present disclosure.

Referring to FIG. 14, a terminal 1200 may include a measurement unit that measures DL Sync of different beams, a calculation unit that calculates a DL sync difference between a serving beam and a neighbor beam, a storage unit that stores a DL sync difference value, and a reporting unit that reports DL Sync Delta information to a base station by adding it to the existing beam feedback. In FIG. 14, although each function of a terminal operating according to an embodiment of the present disclosure is illustrated divided into separate units, it goes without saying that one or more units may be combined to implemented as a terminal configuration of FIG. 12. For an example, the reporting unit may be included in a transmit/receive unit, the storage unit may be included in a memory, and the measurement unit and the calculation unit may be included in a processor.

A base station 1300 may include a reception unit that receives the beam feedback transmitted from the terminal, a calculation unit that calculates the Timing Advance based on the received DL Sync Delta, a determination unit that determines whether to change the beam, and a transmission unit that transmits a beam change request by including calculation TA when requesting the beam change when the beam change is determined. In FIG. 14, although each function of the base station operating according to an embodiment of the present disclosure is illustrated divided into separate units, it goes without saying that one or more units may be combined to implemented as a base station configuration of FIG. 13. For an example, the receive unit and the transmit unit may be included in the transmit/receive unit, and the determination unit and the calculation unit may be included in the processor.

The term '~unit' used in the above-described embodiment of the present disclosure refers to software or hardware components such as a field programmable gate array (FPGA) or an application specific integrated circuit (ASIC), and '~unit' performs certain roles. However, the '~unit' does not mean limited to software or hardware. The '~unit' may be configured to be in an addressable storage medium or may be configured to reproduce one or more processors. Therefore, as an example, the '~unit' includes components such as software components, object-oriented software components, class components, and task components, processes, functions, properties, procedures, sub-routines, segments of program code, drivers, firmware, microcode, circuit, data, database, data structures, tables, arrays, and variables. A function provided within the components and the '~units' may be combined into a smaller number of components and '~units' or further divided into additional components and '~units.' Additionally, the components and the '~units' may be implemented to reproduce one or more CPUs within a device or a secure multimedia card. In addition, in an embodiment, the '~unit' may include one or more processors.

Meanwhile, the embodiments disclosed in the present description and drawings are merely provided as a specific example to easily explain the technical content of the present disclosure and to aid understanding of the present disclosure, and are not intended to limit the scope of the present disclosure. In other words, it is obvious to those having ordinary knowledge in the art that other modification examples based on the technical idea of the present disclosure may be implemented. In addition, each of the above embodiments may be operated in combination with each other as needed.

**Claims**

1. A method for aligning uplink synchronization by a terminal in wireless communication system, wherein the method comprises:

    obtaining a difference value between first downlink synchronization based on a synchronization signal/physical broadcast channel, SS/PBCH, block corresponding a first beam and second downlink synchronization based on a SS/PBCH block corresponding a second beam;
    transmitting, based on comparison between the second downlink synchronization and cyclic prefix, CP, length, reporting information comprising information associated with the difference value to a base station; and
    receiving, from the base station, information on a timing advance, TA, value derived based on the information associated with the difference value.

2. The method of claim 1, wherein the method is **characterized in that** the information associated with the difference value is comprised in the reporting information in case of that the second downlink synchronization is greater than the CP length.

3. The method of any one of claims 1 and 2, wherein the method further comprises:

    measuring a reference signal received power, RSRP, value based on each of SS/PBCH block corresponding a different beam of the base station;
    selecting, based on the RSRP value, one or more candidate beams among multiple beams of the base station;
    selecting a beam corresponding to the smallest value among difference values between downlink synchronization associated with each of the one or more candidate beams and the first downlink synchronization, as the second beam, and
    wherein the method is **characterized in that** the reporting information comprises a SS/PBCH block index corresponding to the second beam, the RSRP value, and the difference value.

4. The method of any one of claims 1 to 3, wherein the method is **characterized in that**:

    indexes corresponding to range of difference value is pre-defined based on the first downlink synchronization; and
    index corresponding to the obtained difference value is comprised in the reporting information.

5. The method of any one of claims 1 to 4, wherein the method is **characterized in that**:
the reporting information comprises 1-bit information indicating that the SS/PBCH block index corresponding to the second beam, a reference signal received power, RSRP, value, and the TA value need to be updated.

6. The method of any one of claims 1 to 5, wherein the method is **characterized in that**:
the information on the TA value is comprised on medium access control element, MAC CE, command comprising information indicating a change from the first beam to the second beam.

7. The method of any one of claims 1 to 6, wherein the method further comprises receiving configuration information comprising a request to report the information associated with the difference value.

8. A method performed by a base station in a wireless communication system, wherein the method comprises:

    transmitting, based on a plurality of beams of the base station, a plurality of synchronization signal/physical broadcast channel, SS/PBCH, blocks to a terminal;
    receiving reporting information comprising information associated with a difference value between first downlink synchronization based on a SS/PBCH block corresponding a first beam and second downlink synchronization based on a SS/PBCH block corresponding a second beam from the terminal; and
    transmitting information on a timing advance, TA, value derived based on the information associated with the difference value to the terminal, and
wherein the information associated with the difference value is comprised in the reporting information based on comparison between the second downlink synchronization and cyclic prefix, CP, length.

9. The method of claim 8, wherein the method is **characterized in that** the information associated with the difference value is comprised in the reporting information in case of that the second downlink synchronization is greater than the CP length.

10. The method of any one of claims 8 and 9, wherein the method is **characterized in that**:

one or more candidate beams among a plurality of beams of the base station based on a reference signal received power, RSRP, value corresponding to each of the plurality of SS/PBCH blocks, are determined,
the second beam corresponds to a beam corresponding to the smallest value among difference values between downlink synchronization associated with each of the one or more candidate beams and the first downlink synchronization, and
the reporting information comprises a SS/PBCH block index corresponding to the second beam, the RSRP value, and the difference value.

11. The method of any one of claims 8 to 10, wherein the method is **characterized in that**:

indexes corresponding to range of difference value is pre-defined based on the first downlink synchronization; and
index corresponding to the obtained difference value is reported as the information associated with the difference value.

12. The method of any one of claims 8 to 11, wherein the method is **characterized in that**:
the reporting information comprises 1-bit information indicating that the SS/PBCH block index corresponding to the second beam, a reference signal received power, RSRP, value, and the TA value need to be updated.

13. The method of any one of claims 8 to 12, wherein the method is **characterized in that** the information on the TA value is comprised on medium access control element, MAC CE, command comprising information indicating a change from the first beam to the second beam.

14. The method of any one of claims 8 to 13, wherein the method is **characterized in that** the method further comprises transmitting configuration information comprising a request to report the information associated with the difference value.

15. A terminal of a wireless communication system, comprising:

a transmit/receive unit configured to transmit and receive signals; and
a control unit controlling the transmit/receive unit,
wherein the control unit is configured to:

obtain a difference value between first downlink synchronization based on a synchronization signal/physical broadcast channel, SS/PBCH, block corresponding a first beam and second downlink synchronization based on a SS/PBCH block corresponding a second beam;
transmit, based on comparison between the second downlink synchronization and cyclic prefix, CP, length, reporting information comprising information associated with the difference value to a base station; and
control to receive, from the base station, information on a timing advance, TA, value derived based on the information associated with the difference value.

Reference Sync

Base
Station

DL Sync = Reference Sync
+ DL Path Delay

MS

UL Sync = Reference Sync
– UL Path Delay =
DL Sync – Timing
Advance Value

FIG. 1

SS/PBCH
BEAM#0

SS/PBCH
BEAM#1

SS/PBCH
BEAM#2

SS/PBCH
BEAM#3

SS/PBCH
block

SS/PBCH
block

SS/PBCH
block

SS/PBCH
block

SLOT
(=0.125ms, 120kHz SCS)

SLOT

HALF FRAME CYCLE FOR SS/PBCH BLOCK

FREQUENCY

TIME

FIG. 2

FIG. 3

FIG. 4

① Beam measurement using SSB

② Beam Change based on SSBRI

③ MIMO ch. measurement based on CSI-RS

④ Data transmission (Hybrid Beamforming)

SSB Tx (SSBRI #0~#63)  Feedback Request  SSBRI Feedback  MAC-CE for beam change  HARQ feedback  CSI request  CSI-RS (2 port)  CSI feedback (for MIMO)  Data (PMI is used for precoding)

SSBRI #0  SSBRI #1  SSBRI #63  Request Beam Change (MAC-CE or RRC)  Beam Change

gNB

SSB  DL control  UL control  MAC-CE  HARQ FB  DL control  CSI-RS  UL control  DL Data

UE

SSB measurement  DEFINED TO BE CAPABLE OF TRANSMITTING ONLY 1 TO 4 SSBRI AND RSRP PAIR  CSI measurement

SSB : Synchronization Signal Block
SSBRI : SSB Resource Index

FIG. 5

EP 4 440 211 A1

START

MEASURE SSB — S610

OBTAIN DL SYNC AND
MEASURING RSRP — S620

NO

FEEDBACK
REQUEST — S630

YES

TRANSMIT FEEDBACK
(BEAM ID, RSRP PAIR) — S640

END

FIG. 6

Base Station
Path Delay(90m)

@ Serving Beam

Path Length(150m)
@ Neighbor Beam

MS

FIG. 7

FIG. 8

START

MEASURE SSB —— S910

OBTAIN DL SYNC AND
MEASURING RSRP —— S920

S930

IS CURRENT BEAM
SERVING BEAM?

YES ← | → NO

S941

STORE DL SYNC INFORMATION
OF SERVING BEAM

S942

CALCULATE AND STORE DIFFERENCE
WITH DL SYNC INFORMATION
OF STORED SERVING BEAM

NO ← FEEDBACK
REQUEST —— S950

YES

TRANSMIT FEEDBACK
(BEAM ID, RSRP, DELTA TUPLE) —— S960

END

FIG. 9

START

TRANSMIT FEEDBACK REQUEST — S1010

RECEIVE FEEDBACK INFORMATION — S1020
NO
YES

BEAM CHANGE REQUIRED? — S1030
NO
YES

REQUEST BEAM CHANGE w/ TA VALUE — S1040

IS HARQ FEEDBACK RECEIVED? — S1050
NO
YES

BEAM SWITCH — S1060

END

FIG. 10

SSB Tx
(SSBRI #0~#63)

Feedback Request

SSBRI Feedback

MAC-CE for beam change

HARQ feedback

CSI request (2 port)

CSI-RS

CSI feedback (for MIMO)

Data
[PMI is used for precoding]

SSBRI #0    SSBRI #1    SSBRI #63

Beam Change

Request Beam Change
(MAC-CE or RRC)

gNB

UE

SSB measurement

SSB

DL control

UL control

DL control

HARQ FB

MAC-CE

DL control

CSI-RS

UL control

CSI measurement

DL Data

1. CHANGE TO REPORT SSBRI, RSRP, DL SYNC DELTA TUPLE

2. CHANGE TO BE CAPABLE OF TRANSMITTING TA VALUE IN ADDITION TO TCI STATE [BEAM ID]

SSB : Synchronization Signal Block
SSBRI : SSB Resource Index

FIG. 11

1200

1201

TRANSMIT/
RECEIVE UNIT

1202

1203

PROCESSOR

MEMORY

FIG. 12

1300

1301                                    1302

TRANSMIT/
RECEIVE UNIT

1303                                    PROCESSOR

MEMORY

FIG. 13

```
┌─────────────────────────────────────────────┐        ┌─────────────────────────────────────────────┐
│            ┌─────────────────┐              │        │            ┌─────────────────┐              │
│            │  BASE STATION   │              │        │            │    TERMINAL     │              │
│            │     (1300)      │              │        │            │     (1200)      │              │
│            └─────────────────┘              │        │            └─────────────────┘              │
│                                              │        │                                              │
│  ┌──────────────────┐  ┌──────────────────┐ │        │ ┌──────────────────┐  ┌──────────────────┐ │
│  │  SYNC DELTA BASED │◄─│ BEAM-BASED DL SYNC│ │◄──────►│ │ BEAM-BASED DL SYNC│─►│ BEAM-BASED DL SYNC│ │
│  │TA CALCULATION UNIT│  │ DELTA RECEIVE UNIT│ │        │ │ MEASUREMENT UNIT  │  │   STORAGE UNIT    │ │
│  └──────────────────┘  └──────────────────┘ │        │ └──────────────────┘  └──────────────────┘ │
│           │                                  │        │                                  │          │
│           ▼                                  │        │                                  ▼          │
│  ┌──────────────────┐  ┌──────────────────┐ │        │ ┌──────────────────┐  ┌──────────────────┐ │
│  │   BEAM CHANGE    │─►│   BEAM CHANGE    │ │        │ │ BEAM-BASED DL SYNC│◄─│ BEAM-BASED DL SYNC│ │
│  │  DECISION UNIT   │  │ REQUEST UNIT w/TA │ │        │ │ DELTA REPORT UNIT │  │   DELTA REPORT    │ │
│  │                  │  │                  │ │        │ │                  │  │ CALCULATION UNIT  │ │
│  └──────────────────┘  └──────────────────┘ │        │ └──────────────────┘  └──────────────────┘ │
└─────────────────────────────────────────────┘        └─────────────────────────────────────────────┘
```

FIG. 14

## INTERNATIONAL SEARCH REPORT

International application No.

**PCT/KR2022/018829**

| A. | CLASSIFICATION OF SUBJECT MATTER |
|---|---|

**H04W 56/00**(2009.01)i; **H04W 24/10**(2009.01)i; **H04W 16/28**(2009.01)i; **H04B 7/06**(2006.01)i

According to International Patent Classification (IPC) or to both national classification and IPC

| B. | FIELDS SEARCHED |
|---|---|

Minimum documentation searched (classification system followed by classification symbols)

H04W 56/00(2009.01); H04B 7/04(2006.01); H04B 7/0408(2017.01); H04B 7/06(2006.01); H04W 16/28(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔(beam), SS/PBCH, 하향링크 동기(downlink synchronization), 차이(difference), CP 길이(CP length), TA

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2015-0013283 A (SAMSUNG ELECTRONICS CO., LTD.) 04 February 2015 (2015-02-04) See paragraphs [0156]-[0157]; claim 1; and figure 12. | 1-2,4,6-9,11,13-15 |
| A | | 3,5,10,12 |
| Y | KR 10-2014-0125693 A (SAMSUNG ELECTRONICS CO., LTD. et al.) 29 October 2014 (2014-10-29) See paragraphs [0028]-[0030]; claim 6; and figure 8. | 1-2,4,6-9,11,13-15 |
| A | KR 10-2017-0093720 A (KT CORPORATION) 16 August 2017 (2017-08-16) See paragraphs [0174]-[0191]; and figures 15-16. | 1-15 |
| A | KR 10-2019-0123863 A (ELECTRONICS AND TELECOMMUNICATIONS RESEARCH INSTITUTE) 04 November 2019 (2019-11-04) See paragraphs [0033]-[0037]; and figure 3. | 1-15 |
| A | KR 10-2021-0024637 A (ZTE CORPORATION) 05 March 2021 (2021-03-05) See paragraphs [0018]-[0179]; and figures 1-2. | 1-15 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 February 2023** | **10 February 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/018829**

| Patent document cited in search report | | | Publication date (day/month/year) | Patent family member(s) | | | Publication date (day/month/year) |
|---|---|---|---|---|---|---|---|
| KR | 10-2015-0013283 | A | 04 February 2015 | EP | 2847891 | A1 | 18 March 2015 |
| | | | | EP | 2847891 | B1 | 24 April 2019 |
| | | | | US | 2013-0301619 | A1 | 14 November 2013 |
| | | | | US | 8958412 | B2 | 17 February 2015 |
| | | | | WO | 2013-169036 | A1 | 14 November 2013 |
| KR | 10-2014-0125693 | A | 29 October 2014 | KR | 10-2043138 | B1 | 11 November 2019 |
| | | | | US | 2014-0314069 | A1 | 23 October 2014 |
| | | | | US | 9516618 | B2 | 06 December 2016 |
| KR | 10-2017-0093720 | A | 16 August 2017 | | None | | |
| KR | 10-2019-0123863 | A | 04 November 2019 | | None | | |
| KR | 10-2021-0024637 | A | 05 March 2021 | CN | 110662285 | A | 07 January 2020 |
| | | | | EP | 3817465 | A1 | 05 May 2021 |
| | | | | US | 2021-0289461 | A1 | 16 September 2021 |
| | | | | WO | 2020-001264 | A1 | 02 January 2020 |

Form PCT/ISA/210 (patent family annex) (July 2022)